# EUROPEAN PATENT APPLICATION

(11) **EP 2 149 777 A2**
(43) Date of publication of application: **03.02.2010**
(21) Application number: 09166527.3
(22) Date of filing: 28.07.2009
(51) Int. Cl.: G01B 9/02

(54) **Oblique incidence interferometer**

(30) Priority: 29.07.2008 JP 2008194382
(71) Applicant: Mitutoyo Corporation, Kawasaki-shi, Kanagawa 213-8533 (JP)
(72) Inventor: Kuriyama, Yutaka, Tsukuba-shi Ibaraki 350-0854 (JP); Kawasaki, Kazuhiko, Tsukuba-shi Ibaraki 350-0854 (JP)
(74) Representative: Grünecker, Kinkeldey, Stockmair & Schwanhäusser Anwaltssozietät

(57) **Abstract**

An oblique incidence interferometer 1 configured to measure a shape of measurement objective surface S by irradiating the measurement objective surface S with coherent light in an oblique direction to a normal of the measurement objective surface S to cause a measurement beam reflected from the measurement objective surface S to interfere with a reference beam, the oblique incidence interferometer including a light source configured to emit the coherent light; a beam dividing unit 14 configured to divide the coherent light from the light source 11 into the measurement beam and the reference beam, polarizing directions of both beams being perpendicular to each other; a first beam deflection unit 15 configured to fold the measurement beam divided by the beam dividing unit 14 to cause the folded measurement beam to enter the measurement objective surface S at a predetermined angle to the measurement objective surface S; a second beam deflection unit 16 configured to fold the measurement beam reflected by the measurement objective surface S; and a beam combining unit 17 configured to combine the measurement beam folded by the second beam deflection unit 16 with the reference beam.

## Description

The present invention relates to an oblique incidence interferometer.

Hitherto, various interferometers for measuring a surface shape of a workpiece have been known. Among these interferometers, an oblique incidence interferometer that can measure a shape of measurement objective surface with large waviness or non-mirror surface (rough face) has been known. The oblique incidence interferometer measures a shape of the measurement objective surface by irradiating the measurement objective surface with coherent light in an oblique direction to the normal of the objective surface, causing a measuring beam reflected from the measurement objective surface to interfere with a reference beam so as to produce interference fringes, and analyzing the interference fringes.

For example, Japanese Unexamined Patent Application Publication No. 2008-32690 discloses a configuration of such an oblique incidence interferometer in which three or more interference images required for a phase shift method that is a general method of analyzing interference fringes, can be simultaneously picked up.

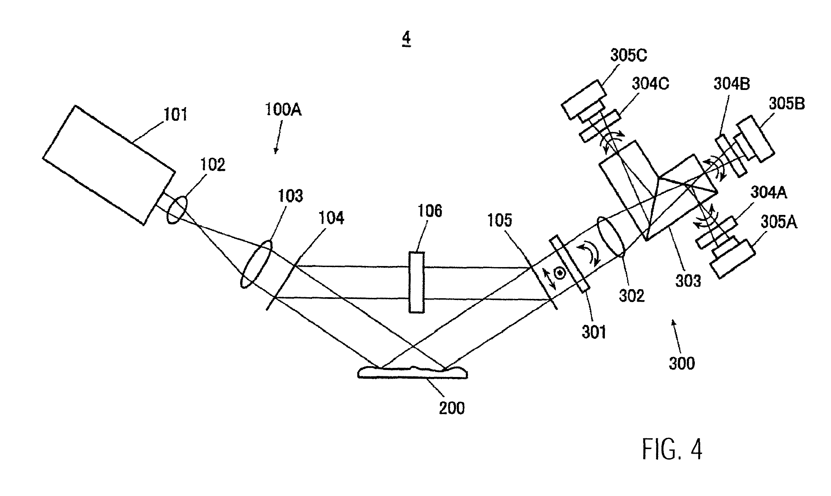

Fig. 4 illustrates a configuration example of such an oblique incidence interferometer 4. The oblique incidence interferometer 4 includes an irradiation unit 100A and a detection unit 300. The irradiation unit 100A includes a light source 101, lenses 102 and 103, a beam dividing element 104, a beam combining element 105, and an element 106 for rotating a polarization plane of incident light. The detection unit 300 includes a quarter wave plate 301, a lens 302, a three prism arrangement 303, polarizing plates 304A to 304C, and image pickup devices 305A to 305C.

A beam emitted by the light source 101 enters the beam dividing element 104 via the lenses 102 and 103 to be divided into two beams. One of the divided beams is caused to irradiate the surface of a measurement object 200 in an oblique direction. Then, the light reflected from the measurement object 200 is combined by the beam combining element 105 with the other beam divided by the beam dividing element 104 and rotated with regard to a polarization plane by the element 106. The combined beam is shifted in phase by an optical system including the quarter wave plate 301, the lens 302, the three prism arrangement 303, and the polarizing plates 304A to 304C to produce interference fringes. The interference fringes are picked up by the image pickup devices 305A to 305C, respectively.

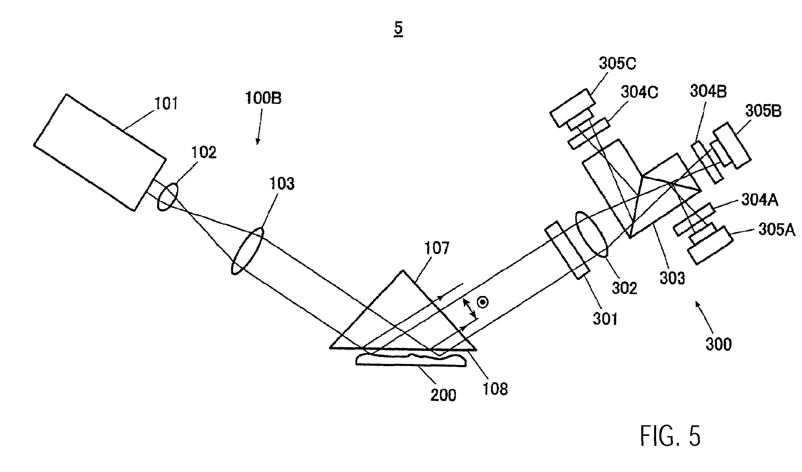

As illustrated in Fig. 5, an oblique incidence interferometer 5 including an irradiation unit 100B having a triangular prism 107 instead of the beam dividing element 104 and the beam combining element 105 is also proposed. On a bottom surface of the triangular prism 107, for example, a wire grid polarizing plate 108 is arranged.

The oblique incidence interferometer 5 irradiates an object with laser light through the triangular prism 107, and causes the light reflected from the wire grid polarizing plate 108 on the bottom surface of the triangular prism 107 to interfere with the light reflected from the surface of the measurement object 200.

However, in the case of the oblique incidence interferometer 4 illustrated in Fig. 4, in addition to necessity of arranging the optical elements, such as the light source 101 and the detection unit 300, along an extension of the optical axis of measurement light, with an increasing illuminating angle of the light to the normal of the measurement objective surface, the entire apparatus becomes longer sideways due to an effect of the size of each optical element, so that a problem arises in that the apparatus becomes larger.

Also, in the case of the oblique incidence interferometer 5 illustrated in Fig. 5, since an extinction ratio of the reference light is relatively low, the signal to noise ratio of the interference fringe images is low, so that a problem arises in that measurement accuracy is not favorable.

As mentioned above, conventional oblique incidence interferometers have a problem that it is difficult to improve the measurement accuracy while achieving miniaturization of the apparatus.

It is an object of the present invention to provide an oblique incidence interferometer having favorable measurement accuracy while achieving the miniaturization of the apparatus.

An oblique incidence interferometer according to the present invention comprises a specimen support, a light source, a beam dividing unit, a first beam deflection unit, a second beam deflection unit and a beam combining unit. The specimen support is adapted for holding a measurement object such that a measurement objective surface of the measurement object is aligned with an object plane. The light source is configured to emit coherent light. The beam dividing unit is configured to divide the coherent light from the light source into a measurement beam and a reference beam. Polarization directions of the measurement beam and the reference beam are perpendicular to each other. The first beam deflection unit is configured to deflect the measurement beam such that the deflected measurement beam intersects the object plane at a predetermined angle that is oblique to a normal of the object plane. The second beam deflection unit is configured to deflect the measurement beam reflected by the measurement objective surface toward the beam combining unit. The beam combining unit is configured to superimpose the measurement beam deflected by the second beam deflection unit with the reference beam to form a superimposed beam.

According to the present invention, the coherent light from the light source is divided by the beam dividing unit into two beams, polarization directions of which are perpendicular to each other, and one of two beams is used as a measurement beam and the other beam is used as a reference beam to form an optical system wherein interference fringes with a high extinction ratio and a high signal to noise ratio can be obtained causing measurement to achieve higher accuracy.

Since with the first beam deflection unit and the second beam deflection unit, an optical path of the measurement beam can also be changed, the apparatus can be miniaturized.

Hence, an oblique incidence interferometer that reconciles apparatus miniaturization with measurement accuracy can be obtained.
In some embodiments, at least one of the beam dividing unit and the beam combining unit comprises a polarizing beam splitter.
In some embodiments, at least one of the first beam deflection unit and the second beam deflection unit comprises a reflective surface.
In some embodiments, the beam dividing unit is adapted to reflect the reference beam and to transmit the measurement beam, wherein the beam dividing unit and the first beam deflection unit are arranged such that the measurement beam passes through the beam dividing unit again after being deflected by the first beam deflection unit.
In some embodiments, the beam dividing unit comprises a polarizing film provided between two glass plates and the first beam deflection unit comprises a mirror arranged adjacent the beam dividing unit opposite the light source.

In some embodiments, the beam dividing unit and the first beam deflection unit are included in a single optical component.

In some embodiments, the beam combining unit and the second beam deflection unit are arranged such that the reflected measurement beam passes through the beam combining unit before being deflected by the second beam deflection unit and passes through the beam combining unit again after being deflected by the second beam deflection unit.
In some embodiments, the beam combining unit comprises a polarizing film provided between two glass plates and the second beam deflection unit comprises a mirror arranged adjacent the beam combining unit opposite the beam dividing unit.

In some embodiments, the beam combining unit and the second beam deflection unit are included in a single optical component.
In some embodiments, the single optical component is an optical wedge.
In some embodiments, the optical wedge has a first surface adapted to reflect light having a first polarization direction and to transmit light having a second polarization direction that is perpendicular to the first polarization direction, and a second surface that is adapted to reflect at least light having the second polarization direction. The first surface is oblique to the second surface.

In some embodiments, the oblique incidence interferometer further comprises a lens and at least one image pickup device configured to pick up an interference fringe image. The lens is arranged to receive the superimposed beam and to image the object plane to the at least one image pickup device.

In some embodiments, the oblique incidence interferometer further comprises a second beam dividing unit, a plurality of image pickup devices, a quarter wave plate and a plurality of polarizing plates. The second beam dividing unit is configured to divide the superimposed beam into a plurality of partial beams. Each of the image pickup devices is configured to pick up an interference fringe image formed by a respective one of the partial beams. The quarter wave plate is arranged on an input side of the second beam dividing unit. Each of the polarizing plates is arranged between the second beam dividing unit and a respective one of the image pickup devices such that directions of polarization axes of the polarizing plates differ from each other.
In some embodiments, the first beam deflection unit comprises a first reflective surface and the second beam deflection unit comprises a second reflective surface. The oblique incidence interferometer further comprises means for changing an inclination angle of the first reflective surface to the object plane and for changing an inclination angle of the second reflective surface to the object plane while maintaining the inclination angle of the first reflective surface equal to the inclination angle of the second reflective surface.

In some embodiments, the oblique incidence interferometer further comprises means for varying a setting point of the first and second beam deflection units in a height direction that is normal to the object plane. Embodiments of the present invention will be described with reference to the figures, wherein:
Fig. 1 is a drawing showing a schematic configuration of an oblique incidence interferometer according to a first embodiment;
Fig. 2 is a drawing showing a schematic configuration of an oblique incidence interferometer according to a second embodiment;
Fig. 3 is a drawing showing a schematic configuration of an oblique incidence interferometer according to a third embodiment;
Fig. 4 is a drawing showing a schematic configuration of a conventional oblique incidence interferometer; and
Fig. 5 is a drawing showing a schematic configuration of a conventional oblique incidence interferometer.

Specific embodiments of an oblique incidence interferometer according to the present invention will be described below with reference to the drawings. In the drawings, a double-headed arrow schematically illustrates a linearly polarized light component parallel to the plane of drawing and a double circle symbol denotes a linearly polarized light component perpendicular to the plane of drawing.

### First Embodiment

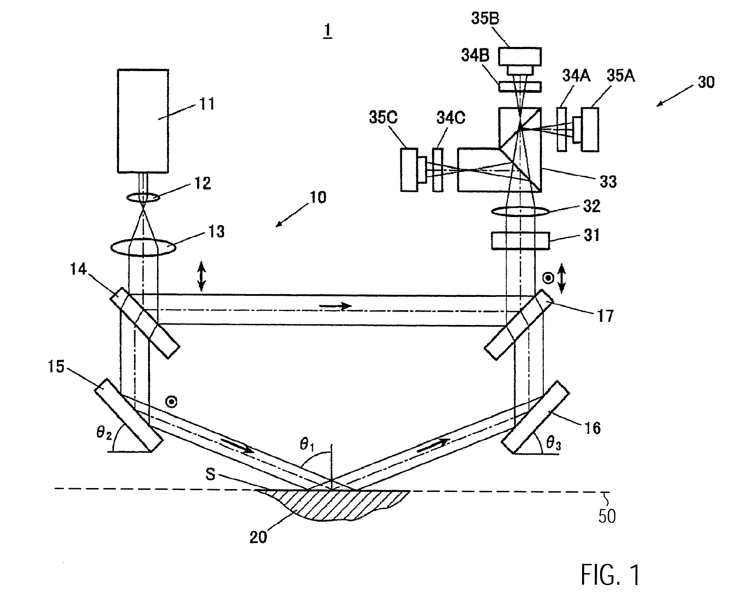

Fig. 1 illustrates a schematic configuration of an oblique incidence interferometer 1 according to a first embodiment.

As illustrated in Fig. 1, the oblique incidence interferometer 1 includes an irradiation section 10 and a detection section 30.

The irradiation section 10 includes a light source 11, lenses 12 and 13, a beam dividing unit 14, a first beam deflection unit 15, a second beam deflection unit 16, and a beam combining unit 17.
The oblique incidence interferometer 1 further comprises a specimen support (not shown) for holding a measurement object 20 such that a measurement objective surface S of the measurement object 20 is aligned with an object plane 50. The specimen support can be a substrate holder of a type known to persons skilled in the art.

The light source 11 emits coherent light toward the beam dividing unit 14. According to the embodiment, the light source 11 is arranged such that the light emitted by the light source 11 propagates in a direction substantially perpendicularly to the object plane 50 and the measurement objective surface S.

The light source 11 may preferably emit laser light, such as He-Ne laser light, having favorable coherence such that when entering an optical system of the oblique incidence interferometer, a component ratio between P-polarized light and S-polarized light does not vary with time.

The light emitted from the light source 11 enters the beam dividing unit 14 after being converted into light collimated with a larger beam diameter by the lenses 12 and 13.

The beam dividing unit 14 divides the collimated light emitted from the light source 11 via the lenses 12 and 13 into two polarized beams.

Specifically, the beam dividing unit 14 includes a polarization beam splitter, for example. The polarization beam splitter is configured to sandwich a polarizing film having polarization dependency with two optical glass plates, for example. The polarizing film has optical **characteristics in that** among the collimated light components, the S-polarized light is reflected therefrom while the P-polarized light is passed therethrough, and the polarizing film divides the light obliquely incident in the polarizing film into both polarized light components by causing the P-polarized light to pass therethrough and the S-polarized light to be reflected therefrom. On the polarizing film, the polarization beam splitter, therefore, divides incident light having various polarized light components into two divided beams, polarizing directions of which are perpendicular to each other (vertical linear polarized light and horizontal linear polarized light).

A rectangular parallelepiped polarization beam splitter formed by sandwiching the polarizing film with two rectangular prisms may be also used as the beam dividing unit 14.

The two beams divided by the beam dividing unit 14 proceed straight toward the first beam deflection unit 15 and the beam combining unit 17, respectively. In the following description, among the beams divided by the beam dividing unit 14, a beam proceeding toward the first beam deflection unit 15 is assumed to be a measurement beam, with which the measurement object 20 is irradiated, and the beam proceeding toward the beam combining unit 17 is assumed to be a reference beam being a measurement reference.

The first beam deflection unit 15 and the second beam deflection unit 16 include reflection mirrors, for example, and may change the optical path of incident light by reflecting the incident light.

The first beam deflection unit 15 deflects the measurement beam, and causes the measurement beam divided by the beam dividing unit 14 to intersect the measurement objective surface S aligned with the object plane 50 at a predetermined angle.

Specifically, the first beam deflection unit 15 is designed such that the measurement beam from the beam dividing unit 14 is caused to intersect the measurement objective surface S aligned with the object plane 50 at a predetermined incident angle θ1 to the normal of the measurement objective surface S and the object plane 50. The incident angle θ1 can be adjusted by changing an inclination (referred to as a set up angle θ2 hereinafter) of the first beam deflection unit 15 to the measurement objective surface S and the object plane 50.

That is, when the set up angle θ2 is reduced, the incident angle θ1 is increased and when the arrangement angle θ2 is increased, the incident angle θ1 is reduced.

At this time, the specimen support (not shown) carrying the measurement object 20 thereon is vertically movable, so that the incident position of light on the measurement objective surface S can be adjusted.

The second beam deflection unit 16 causes a measurement beam reflected from the measurement objective surface S to enter the beam combining unit 17 by deflecting the measurement beam.

Specifically, the second beam deflection unit 16 reflects a measurement beam reflected from the measurement object 20 toward the beam combining unit 17 such that an optical axis of the reflected measurement beam is aligned with an optical axis of the reference beam reflected by the beam combining unit 17.

In the same way as the design of the first beam deflection unit 15, the second beam deflection unit 16 can also set up the inclination (set up angle θ3) to the measurement objective surface S and the object plane 50.

The first beam deflection unit 15 and the second beam deflection unit 16 may have ideal component arrangements when the setting points in a height direction are the same and the set up angle θ2 is identical with the set up angle θ3.

The first beam deflection unit 15 and the second beam deflection unit 16 may also be configured for changing the setting points in the height direction, wherein the height direction can be perpendicular to the object plane 50 and the measurement objective surface S aligned with the object plane 50, respectively. In Fig. 1, the height direction corresponds to the vertical direction.

For setting the inclination angle θ₂ of the first beam deflection unit 15 to the object plane, means for rotating the first beam deflection unit 15 can be provided. For changing the setting point of the first beam deflection unit 15 in the height direction, means for moving the first beam deflection unit 15 in the height direction can be provided.
Similarly, for setting the inclination angle θ₃ of the second beam deflection unit 16, means for rotating the second beam deflection unit 15 can be provided, and means for moving the second beam deflection unit 16 in the height direction can be provided for changing the setting point of the second beam deflection unit 16 in the height direction.

If the first beam deflection unit 15 and the second beam deflection unit 16 are configured in the above manner, the arrangement can be adjusted such that light is incident at the same position on the measurement objective surface S independently of the set up angles θ2 and θ3, for example, by raising the setting points when the set up angles θ2 and θ3 are increased, and by lowering the setting points when the set up angles θ2 and θ3 are reduced.

The beam combining unit 17 superimposes the measurement beam deflected by the second beam deflection unit 16 with the reference beam.

Specifically, the beam combining unit 17 is formed of a polarization beam splitter, in the same way as the configuration of the beam dividing unit 14, and superimposes the measurement beam and the reference beam such that the optical axis of the measurement beam is aligned with the optical axis of the reference beam to feed the combined waves to the detection section 30.

The detection section 30 includes a quarter wave plate 31, a lens 32, a three prism arrangement (second beam dividing unit) 33, polarization plates 34A to 34C, and image pickup devices 35A to 35C.
The lens 32 can be configured such that light rays from points lying in the object plane 50 are focused at each of the image pickup devices 35A to 35C, in particular on light detectors provided therein. The location of the object plane 50 depends on optical properties of the lens 32 such as the focal length thereof, and on the relative arrangement of the lens 32, the second beam deflection unit 16 , the three prism arrangement 33, and the image pickup units 35A to 35C. In some embodiments, the location of the object plane 50 can also depend on optical properties of the beam combining unit 17, the quarter wave plate 31 and the polarization plates 34A to 34C. In some embodiments, an equal length of an optical path can be provided between an input side of the three prism arrangement 33 and each of the image pickup units 35A to 35C such that sharp images of an object located at the object plane 50 can be taken by each the image pickup units 35A to 35C.

The quarter wave plate 31 is arranged on an input side of the three prism arrangement 33 to convert the combined light from the beam combining unit 17 into circularly polarized light.

The three prism arrangement 33 can be formed by bonding planes of three prisms together, for example, and divides the combined light into three divided beams by causing the light to pass through or to reflect from the bonded planes.

The polarizing plates 34A to 34C and the image pickup devices 35A to 35C are arranged to respectively correspond to the beams divided by the three prism arrangement 33 in three directions different from each other. The polarizing plates 34A to 34C are arranged such that the directions of polarization axes thereof differ from each other. The images of interference fringes, with phases shifted by angular degrees different from each other by causing light to pass through the polarizing plates 34A to 34C, are picked up by the image pickup devices 35A to 35C.

Then, the functions of the oblique incidence interferometer 1 configured in such a manner will be described.

The light source 11 emits coherent light toward the beam dividing unit 14.

The light emitted from the light source 11 is collimated via the lenses 12 and 13 to enter the beam dividing unit 14. The incident light is divided by the beam dividing unit 14 into two polarized beams having polarization directions perpendicular to each other so as to proceed straightly toward the first beam deflection unit 15 and the beam combining unit 17, respectively.

One of the divided beams is used as the measurement beam, and is deflected by the first beam deflection unit 15. Then, the measurement objective surface S of the measurement object 20 is irradiated at a predetermined angle thereto with the measurement beam. The measurement beam reflected from the measurement objective surface S is again deflected by the second beam deflection unit 16 and enters the beam combining unit 17.

On the other hand, the other beam divided by the beam dividing unit 14 is used as the reference beam and enters the beam combining unit 17.

Then, the measurement beam from the second beam deflection unit 16 is superimposed with the reference beam from the beam dividing unit 14 by the beam combining unit 17.

The superimposed beam from the beam combining unit 17 is converted into circularly polarized light by the quarter wave plate 31. The beam becoming the circular polarized light is divided by the three prism arrangement 33 into beams in three directions. The divided beams in the three directions respectively pass through the polarizing plates 34A to 34C arranged such that polarization axis directions differ from each other to form interference fringes with phases shifted by angular degrees different from each other. Then, images of the interference fringes with shifted phases are picked up by the image pickup devices 35A to 35C, respectively.

The oblique incidence interferometer 1 also includes a computing unit (not shown) to obtain a surface shape of the measurement object 20 by computing processing according to a known phase shift method on the basis of the interference fringe images picked up by the image pickup devices 35A to 35C.

As described above, the oblique incidence interferometer 1 according to the first embodiment includes the light source 11 configured to emit coherent light; the beam dividing unit 14 configured to divide the coherent light from the light source 11 into the measurement beam and the reference beam, polarizing directions of both beams being perpendicular to each other; the first beam deflection unit 15 configured to deflect the measurement beam divided by the beam dividing unit 14 and to cause the measurement beam to intersect the measurement objective surface S aligned with the object plane 50 at a predetermined angle; the second beam deflection unit 16 configured to deflect the measurement beam reflected from the measurement objective surface S; and the beam combining unit 17 configured to superimpose the measurement beam deflected by the second beam deflection unit 16 with the reference beam.

That is, because of an optical system wherein the light from the light source is divided by the beam dividing unit 14 into two beams, polarization directions of which are perpendicular to each other, to use one as the measurement beam and the other as the reference beam, interference fringes with a high extinction ratio and a high signal to noise ratio can be obtained, allowing a higher accuracy of the measurement. Since the optical path of the measurement beam can also be changed with the first beam deflection unit and the second beam deflection unit, the oblique incidence interferometer can be miniaturized.

Hence, the oblique incidence interferometer that reconciles the apparatus miniaturizing with the measurement accuracies can be obtained.

With the first beam deflection unit 15 and the second beam deflection unit 16, the incident angle θ1 of the light, with which the measurement objective surface S is irradiated, can also be changed, so that the apparatus can react to various surface shapes of the measurement object 20.

Because of the optical system wherein none of the optical components is arranged above the measurement objective surface S, a degree of freedom of arrangement of optical components is increased, so that risks of apparatus breakage due to difficult arrangement of optical components can be reduced, improving practicality and usability.

There are also provided the three prism arrangement 33 configured to divide the combined light from the beam combining unit 17 obtained by superposition of the measurement beam and the reference beam into a plurality of divided beams; a plurality of the image pickup devices 35A to 35C configured to pick up a plurality of interference fringe images formed by the plurality of divided beams, respectively; the quarter wave plate 31 arranged on the incident side of the three prism arrangement 33; and a plurality of the polarizing plates 34A to 34C arranged on the imaging plane sides of the plurality of the image pickup devices 35A to 35C such that the directions of the polarization axes differ from each other.

Hence, three or more interference images that can be used for analyzing interference fringes by a phase shift method can be instantly picked up without having mechanically movable parts, reducing effects of vibrations and air fluctuations to improve the robustness of measurement.

### Second Embodiment

In the following, a second embodiment of the present invention will be described mainly on points different from the first embodiment. Like reference numerals designate like components common to the first embodiment and the description thereof is omitted.

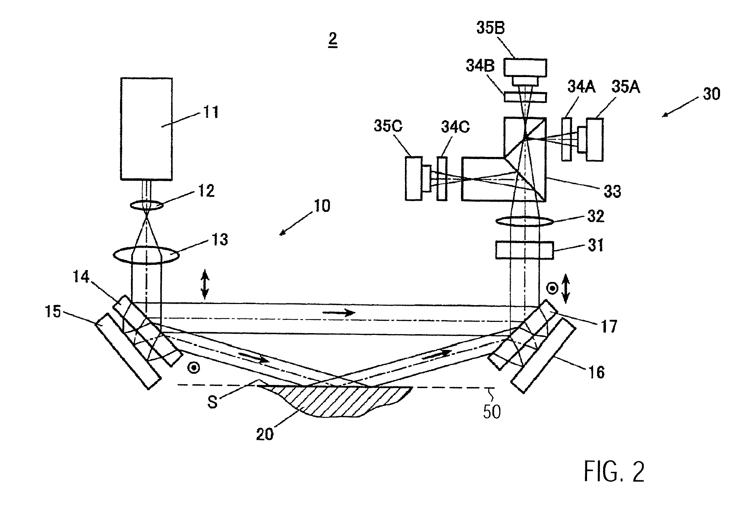

Fig. 2 is a drawing illustrating a schematic configuration of the oblique incidence interferometer 2 according to the second embodiment.

As illustrated in Fig. 2, in the oblique incidence interferometer 2, the beam dividing unit 14 and the first beam deflection unit 15 as well as the beam combining unit 17 and the second beam deflection unit 16 are arranged close to each other, such that the measurement beam passes through the beam dividing unit 14 and the beam combining unit 17 a plurality of times.

Specifically, the measurement beam divided by the beam dividing unit 14 again passes through the beam dividing unit 14 after being reflected by the first beam deflection unit 15, so that the measurement objective surface S is irradiated with the measurement beam.

The measurement beam reflected from the measurement objective surface S is deflected by the second beam deflection unit 16 after passing through the beam combining unit 17, and the measurement beam again enters the beam combining unit 17 to be superimposed with the reference beam. Then, the superimposed beam is brought into the detection section 30 in the same way as in the first embodiment.

Hence, in the optical path arrangement according to the second embodiment, the measurement beam passes through the beam dividing unit 14 and the beam combining unit 17 two times, respectively (four times in total), so that the proportion of undesirable polarized light components (noise) included in the measurement beam is reduced due to the functions of the beam dividing unit 14 and the beam combining unit 17.

In the same way as the configuration of the first embodiment, the incident angle of the measurement beam to the measurement objective surface can be adjusted.

As described above, according to the oblique incidence interferometer 2 of the second embodiment, while the same effect as the effect of the first embodiment can be obtained, additionally a proportion of noise included in the measurement beam is reduced and an extinction ratio can be increased to be higher than the extinction ratio of the oblique incidence interferometer 1 according to the first embodiment, since a number of passing times through the beam dividing unit 14 and the beam combining unit 17 is doubled. Accordingly, the signal to noise ratio of the interference fringes obtained in the detection section 30 can be increased.

Also, the distance between the beam dividing unit 14 and the first beam deflection unit 15 as well as the distance between the beam combining unit 17 and the second beam deflection unit 16 are reduced, so that while the entire apparatus can be more miniaturized, the effect of air fluctuations can be reduced because the distance between the reference beam and the measurement beam is reduced.

### Third Embodiment

In the following, a third embodiment of the present invention will be described mainly on points different from the first embodiment. Like reference numerals designate like common components and the description thereof is omitted.

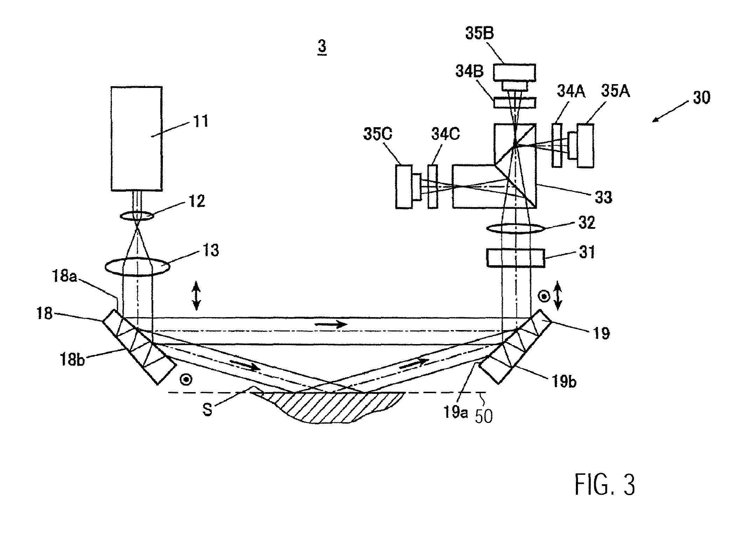

Fig. 3 is a drawing illustrating a schematic configuration of an oblique incidence interferometer 3 according to the third embodiment.

As illustrated in Fig. 3, in the oblique incidence interferometer 3, the beam dividing unit 14 and the first beam deflection unit 15 are included in a single optical component. The beam combining unit 17 and the second beam deflection unit 16 are also included in a single optical component. The single optical component may be a wedge element (referred to as an optical wedge hereinafter), for example, wherein one plane is slightly inclined to an opposing other plane.

Specifically, the oblique incidence interferometer 3 includes a first optical wedge 18 forming the beam dividing unit 14 and the first beam deflection unit 15, as well as a second optical wedge 19 forming the second beam deflection unit 16 and the beam combining unit 17.

The optical wedge 18 includes an upper plane 18a serving as a beam dividing unit and a bottom plane 18b serving as a first beam deflection unit.

The optical wedge 19 includes an upper plane 19a serving as a beam combining unit and a bottom plane 19b serving as a second beam deflection unit.

Accordingly, the light entering the optical wedge 18 is divided by the upper plane 18a into the measurement beam and the reference beam, wherein the measurement beam again passes through the upper plane 18a after being reflected by the bottom plane 18b, so that the measurement objective surface S is irradiated with the measurement beam.

Also, the measurement beam reflected from the measurement objective surface S is deflected by the bottom plane 19b after passing through the upper plane 19a of the optical wedge 19 for the first time, and again enters the upper plane 19a to be superimposed with the reference beam. Thereafter, in the same way as the first and second embodiments, the beam is brought into the detection section 30.

The upper plane 18a of the optical wedge 18 and the upper plane 19a of the optical wedge 19 can be configured to reflect light having a first polarization direction, corresponding to the polarization direction of the reference beam, and to transmit light having a second polarization direction, corresponding to the polarization direction of the measurement beam. For this purpose, an element having polarization dependent reflection and transmission properties can be provided on each of the upper planes 18a, 19a. In some embodiments, wire grid polarizing plates can be used for this purpose. The lower plane 18b of the optical wedge 18 and the lower plane 19b of the optical wedge 19 can be configured to reflect at least light having the second polarization direction. In some embodiments, the lower planes 18b, 19b can be configured to reflect light irrespective of the polarization direction thereof. In such embodiments, a reflective metallic coating or a reflective dielectric layer stack can be formed on each of the bottom surfaces. In other embodiments, the lower planes 18b, 19b can be configured to selectively reflect light having the second polarization direction. In such embodiments, an element having polarization dependent reflection and transmission properties such as a wire grid polarizing plate can be provided on each of the lower planes 18b, 19b.

As described above, according to the oblique incidence interferometer 3 of the third embodiment, while the same effects as the effects of the first and second embodiments can be obtained, by introducing single optical elements, each with one plane serving as the beam dividing unit 14 or the beam combining unit 17 and the other plane serving as the first beam deflection unit 15 or the second beam deflection unit 16, a more simplified optical system can be obtained, and the same optical path as the optical path of the second embodiment can be provided while reducing a number of optical elements.

Hence, when a surface shape of the measurement objective surface S is known and generally constant, an optimum incident angle to the measurement objective surface S can be selectively fixed.

According to the first to third embodiments described above, the optical path of the measurement beam is folded using two beam deflection units; however, a number of the beam deflection units is not limited thereto.

The light source 11 may preferably use a light source outputting the laser light linearly polarized in form of P-polarized light or S-polarized light. When configuring the light source in such a manner, an amount of light, with which the measurement objective surface S of the measurement object 20 is irradiated, can be controlled in accordance with the roughness of the measurement objective surface S by adjusting a polarization angle to the beam dividing unit 14 (polarizing beam splitter). When the roughness of the measurement objective surface S is large, for example, the reflection efficiency is reduced, so that an amount of light passing through the beam dividing unit 14 may be increased.

According to a further embodiment of the present invention, in an oblique incidence interferometer configured to measure a shape of a measurement objective surface by irradiating the measurement objective surface with coherent light in an oblique direction to a normal of the measurement objective surface to cause a measurement beam reflected from the measurement objective surface interfere with a reference beam, the oblique incidence interferometer includes a light source configured to emit the coherent light; a beam dividing unit configured to divide the coherent light from the light source into the measurement beam and the reference beam, polarization directions of both beams being perpendicular to each other; a first beam deflection unit configured to fold the measurement beam divided by the beam dividing unit so as to cause the folded measurement beam to enter the measurement objective surface at a predetermined angle to the measurement objective surface; a second beam deflection unit configured to fold the measurement beam reflected by the measurement objective surface toward the reference beam; and a beam combining unit configured to combine the measurement beam folded by the second beam deflection unit with the reference beam.

According to a further embodiment of the present invention, in the oblique incidence interferometer according to the preceding paragraph, the beam dividing unit and the first beam deflection unit as well as the beam combining unit and the second beam deflection unit are arranged closely to each other; the measurement beam folded by the first beam deflection unit is configured to again pass through the beam dividing unit so as to enter the measurement objective surface; and the measurement beam reflected by the measurement objective surface is configured to be folded by the second beam deflection unit after passing through the beam combining unit so as to again enter the beam combining unit.

According a further embodiment of the invention, in the oblique incidence interferometer according to the preceding paragraph, the beam dividing unit and the first beam deflection unit are included in a single optical component while the beam combining unit and the second beam deflection unit are included in a single optical component.

According to a further embodiment of the invention, in the oblique incidence interferometer described two paragraphs above or in the oblique incidence interferometer described three paragraphs above, the beam dividing unit and the beam combining unit are polarization beam splitters.

According to a further embodiment of the invention, in the oblique incidence interferometer described two paragraphs above, the single optical component is an optical wedge.

According to a further embodiment of the invention, the oblique incidence interferometer according to any one of the five preceding paragraphs further includes a second beam dividing unit configured to divide the combined beam combined by the beam combining unit into a plurality of divided beams; a plurality of image pickup devices configured to pick up a plurality of interference fringe images, respectively, which are respectively formed by the plurality of divided beams; a quarter wave plate arranged on the incident side of the second beam dividing unit; and a plurality of polarizing plates arranged on the imaging plane sides of the plurality of image pickup devices such that the directions of polarizing axes of the polarizing plates differ from each other.

### Reference Numerals

- 1, 2, 3:: oblique incidence interferometer
- 10:: irradiation section
- 11:: light source
- 12,: 13: lens
- 14:: beam dividing unit
- 15:: first beam deflection unit
- 16:: second beam deflection unit
- 17:: beam combining unit
- 18:: optical wedge
- 20:: measurement object
- S:: measurement objective surface
- 30:: detection section
- 31:: wave plate
- 32:: lens
- 33:: three prism arrangement
- 34A to 34C:: polarizing plate
- 35A to 35C:: image pickup device
- 50:: object plane

## Claims

1. An oblique incidence interferometer (1, 2, 3) comprising:
a specimen support for holding a measurement object (20) such that a measurement objective surface (S) of said measurement object (20) is aligned with an object plane (50);
a light source (11) configured to emit coherent light;
a beam dividing unit (14) configured to divide the coherent light from the light source (11) into a measurement beam and a reference beam, polarization directions of said measurement beam and said reference beam being perpendicular to each other; a first beam deflection unit (15) configured to deflect the measurement beam such that the deflected measurement beam intersects the object plane (50) at a predetermined angle that is oblique to a normal of the object plane (50);
a second beam deflection unit (16) configured to deflect the measurement beam reflected by the measurement objective surface (S) toward a beam combining unit (17), wherein said beam combining unit (17) is configured to superimpose the measurement beam deflected by the second beam deflection unit (16) with the reference beam to form a superimposed beam.

2. The oblique incidence interferometer (1, 2, 3) according to claim 1, wherein at least one of the beam dividing unit (14) and the beam combining unit (17) comprises a polarizing beam splitter.

3. The oblique incidence interferometer (1, 2, 3) according to claim 1 or 2, wherein at least one of the first beam deflection unit (15) and the second beam deflection unit (16) comprises a reflective surface (18b, 19b).

4. The oblique incidence interferometer (2, 3) according to any of the preceding claims, wherein the beam dividing unit (14) is adapted to reflect the reference beam and to transmit the measurement beam, and wherein the beam dividing unit (14) and the first beam deflection unit (15) are arranged such that the measurement beam passes through the beam dividing unit (14) again after being deflected by the first beam deflection unit (15).

5. The oblique incidence interferometer (1, 2) according to claim 4, wherein the beam dividing unit (14) comprises a polarizing film provided between two glass plates and the first beam deflection unit (15) comprises a mirror arranged adjacent the beam dividing unit (14) opposite the light source (11).

6. The oblique incidence interferometer (3) according to Claim 4, wherein the beam dividing unit and the first beam deflection unit are included in a single optical component (18).

7. The oblique incidence interferometer (2, 3) according to any of the preceding claims, wherein the beam combining unit (17) and the second beam deflection unit (16) are arranged such that the reflected measurement beam passes through said beam combining unit (17) before being deflected by said second beam deflection unit (16), and passes through said beam combining unit (17) again after being deflected by said second beam deflection unit (16).

8. The oblique incidence interferometer (2) according to claim 7, wherein the beam combining unit (17) comprises a polarizing film provided between two glass plates and the second beam deflection unit (16) comprises a mirror arranged adjacent the beam combining unit (17) opposite the beam dividing unit (14).

9. The oblique incidence interferometer (3) according to claim 7, wherein the beam combining unit and the second beam deflection unit are included in a single optical component (19).

10. The oblique incidence interferometer (3) according to claim 5 or 8, wherein the single optical component (19) is an optical wedge.

11. The oblique incidence interferometer (3) according to claim 10, wherein said optical wedge (18, 19) has a first surface (18a, 19a) adapted to reflect light having a first polarization direction and to transmit light having a second polarization direction that is perpendicular to the first polarization direction, and a second surface (18b, 19b) adapted to reflect at least light having said second polarization direction, said first surface (18a, 19a) being oblique to said second surface (18b, 19b).

12. The oblique incidence interferometer (1, 2, 3) according to any of the preceding claims, further comprising a lens (32) and at least one image pickup device (35A, 35B, 35C) configured to pick up an interference fringe image, wherein the lens (32) is arranged to receive the superimposed beam and to image said object plane to an image plane of the at least one image pickup device (35A, 35B, 35C).

13. The oblique incidence interferometer (1, 2, 3) according to claim 12, further comprising:
a second beam dividing unit (33) configured to divide the superimposed beam into a plurality of partial beams;
a plurality of image pickup devices (35A, 35B, 35C), each configured to pick up an interference fringe image formed by a respective one of said partial beams;
a quarter wave plate (31) arranged on an input side of the second beam dividing unit (33); and
a plurality of polarizing plates (34A, 34B, 34C), each arranged between said second beam dividing unit (33) and a respective one of the plurality of image pickup devices (35A, 35B, 35C) such that directions of polarizing axes of the polarizing plates (34A, 34B, 34C) differ from each other.

14. The oblique incidence interferometer (1, 2, 3) according to any of the preceding claims, wherein the first beam deflection unit (15) comprises a first reflective surface and the second beam deflection unit (16) comprises a second reflective surface, said oblique incidence interferometer (1, 2, 3) further comprising means for changing an inclination angle of said first reflective surface to the object plane and for changing an inclination angle of said second reflective surface to said object plane while maintaining said inclination angle of said first reflective surface equal to said inclination angle of said second reflective surface.

15. The oblique incidence interferometer (1, 2, 3) according to claim 14, further comprising means for varying a setting point of said first and second beam deflection unit in a height direction that is normal to said object plane.
